# EUROPEAN PATENT SPECIFICATION

(11) **EP 0 410 669 B1**
(45) Date of publication and mention of the grant of the patent: **21.04.1993**
(21) Application number: 90308043.0
(22) Date of filing: 23.07.1990
(51) Int. Cl.: E04B 1/68, C08L 23/22

(54) **Water-swellable adhesive water stop**
Wasserquellbare Dichtung
Joint d'étanchéité gonflable à l'eau

(30) Priority: 28.07.1989 JP 196039/89
(43) Date of publication of application: 30.01.1991
(73) Proprietor: C.I. KASEI CO., LTD, Chuo-ku Tokyo-to (JP)
(72) Inventor: Otsuka, Eiichi, Konosu-shi, Saitama-ken (JP)
(74) Representative: Baverstock, Michael George Douglas

(56) References cited:
- EP-A- 0 037 717
- EP-A- 0 050 906
- EP-A- 0 118 998

## Description

The present invention relates to a novel water-swellable adhesive water stop. More particularly, the invention relates to a water-swellable adhesive water stop improved in respect of workability and capable of exhibiting a high water-stopping efficiency.

A water stop is a shaped body widely used to prevent leakage of water by filling gap spaces, interstices, cracks, fissures and the like responsible for leakage of water therethrough, for example, in the joints of precast concrete bodies, construction joints of mortar or concrete works, joints in water-supply pipes and the like in civil engineering works and building construction works in general. As a trend in recent years, in particular, so-called water-swellable water stops are highlighted in respect of the high efficiency of water leakage prevention with a capability of complying with any subsequent expansion of the joint gaps after the construction works by virtue of the volume increase of the water stop by swelling in water.

The major trend in the above mentioned water stops in the prior art is in the use of those of the complete-vulcanization type. A problem in the use of the water stops of this type is in the relatively low working efficiency therewith due to the requirement for a very high fastening pressure to completely fill up gaps in a joint between irregular or rough surfaces or at corner portion of concrete bodies because the water stop material usually has a high tensile strength Tb and high compressive elastic resilience. Accordingly, it is strongly desirable to develop a novel water-swellable water stop material improved in this regard.

In addition, known water stops include those formulated with a readily deformable water-resistant material, such as rubbers, plastics, bitumens and the like, as a base. Water stops formulated with these base materials, however, are not always satisfactory due to their poor compliance with changes in the dimensions of the gaps filled therewith due to decrease in elastic resilience or occurence of the phenomenon of creeping after a long time of service so as to cause a loss in leakage-preventing power. Water stops of the water-swellable vulcanized-rubber type have also been proposed, although they still have a problem to be solved in respect of poor working efficiency as a consequence of the initial leakage-preventing effect exhibited largely depending on the adhesive and the compressive elastic resilience of the rubber.

On the other hand, water stops formulated with an adhesive butyl rubber are currently used as water stops for gap-filling applications despite defects due to relatively large permanent compression set and poor restorability thereof. Water-swellable adhesive water stops formulated with a butyl rubber have been proposed as an improved modification of the above but they, being of the unvulcanized-rubber type, have a defect in their basic properties in that the water stop is susceptible to collapsing under swelling pressure which the water stop cannot withstand when swollen with water.

The present invention provides an improved water-swellable adhesive water stop having excellent performance by fully overcoming the above described problems and disadvantages in conventional water-swellable water stops, which has simultaneously the good workability possessed by unvulcanized adhesive butyl rubbers of the prior art and the good leakage preventing power of the water-swellable water stops of the vulcanized-rubber type and capable of exhibiting excellent adhesiveness, relatively small compressive elastic resilience, good workability in gap-filling works and high leakage-preventing effect under the surface-contacting pressure by rapid swelling with water to fully comply with separation of the jointed surfaces in the joint after working along with a sufficiently high material strength to withstand the swelling pressure which might cause collapsing of the water stop.

Thus, the water-swellable adhesive water stop of the present invention, which has been discovered as a result of extensive investigations undertaken by the inventor, is a shaped and vulcanized body of a composition comprising:
(A) 100 parts by weight of a butyl rubber;
(B) from 1 to 50 parts by weight of a highly water-absorptive resin;
(C) from 30 to 200 parts by weight of an inorganic water-absorbent, preferably, having basicity;
(D) from 10 to 50 parts by weight of a tackifier;
(E) from 30 to 200 parts by weight of a plasticizer;
(F) from 0.1 to 5 parts by weight of a vulcanizing agent; and
(G) optionally, up to 300 parts by weight of a basic filler, and has a tensile strength Tb in the range from 1 to 30 kgf/cm², a 100% elastic modulus in the range from 1 to 4 kgf/cm², ultimate elongation at break Eb of at least 300% and water-swellability S₂₁ in the range from 150 to 500% at 23 °C.

The above mentioned water-swellability S₂₁ or, generally, Sₙ is defined by the ratio in % of the weight of the material swollen by keeping in water at 23 °C for 21 days or n days to the weight of the same material before swelling with water.

The butyl rubber or isobutylene-based rubber used as the component (A) in the present invention includes so-called butyl rubbers as a copolymeric rubber of isobutylene and a small amount of isoprene, which should preferably have a degree of unsaturation of 0.3 to 3.0% by moles, and halogenated butyl rubbers, e.g., chlorinated and brominated butyl rubbers, which should preferably have a degree of unsaturation of 0.1 to 3.0% by moles and a halogen content of 0.3 to 3.0% by weight. In particular, chlorinated and brominated butyl rubbers are preferred in respect of high reactivity.

The highly water-absorptive resin used as the component (B) in the present invention is a polymeric electrolyte having a crosslinked structure capable of absorbing water in an amount of several tens to several hundreds times by weight based on the weight of the polymer at room temperature and serves as a swelling-supporting material and includes, for example, poly(acrylic acid)-based resins, modified poly(vinyl alcohol)-based resins, copolymers of vinyl alcohol and acrylic acid, copolymers of an olefin and maleic anhydride and the like. The last mentioned copolyers of an olefin and maleic anhydride, such as a commercially available product sold under the tradename of KI Gel, are preferred. The amount of this component (B) is usually in the range from 1 to 50 parts by weight or, preferably, from 3 to 40 parts by weight per 100 parts by weight of the component (A). When the amount of the component (B) is too small, a water stop prepared from the composition is poor in water-swellability, showing only an insufficient degree of expansion by swelling or taking an unduly long time for swelling and thus has poor water leakage-preventing power. When the amount of component (B) is too large, on the other hand, the water stop may exhibit an excessively large swelling pressure, eventually resulting in collapsing of the water stop body per se or cracking of the concrete by back-pressure of the back-fills.

The component (C) compounded in the water-swellable composition for the water stop can be any inorganic powdery material capable of swelling by absorbing water in an amount of several to several tens times by weight based on the dry weight of the powder at room temperature. Examples of such an inorganic water-absorbent include, for example, silicic acid compounds such as hydrated silicic acid, hydrated silicates and the like, bentonites mainly composed of montmorillonite and so on. The inorganic water-absorbent as the component (C) should preferably have basicity as determined by pH of at least 8 or, preferably, at least 9 of a 10% by weight aqueous suspension thereof. The amount of the component (C) compounded in the water-swellable composition is usually in the range from 30 to 200 parts by weight or, preferably, from 50 to 150 parts by weight per 100 parts by weight of the component (A). When the amount of the component (C) is too small, the water stop prepared from the composition would be poor in the water-swellability showing only insufficient degree of expansion by swelling or taking an unduly long time for swelling resulting in a poor water leakage-preventing power, in particular, at the initial stage. When the amount of the component (C) is too large, on the other hand, the workability with the water stop would be poor due to the eventual collapsing or hardening of the water stop body when swollen with water.

The component (D) compounded in the water-swellable composition for the water stop of the invention is a tackifier which is exemplified by petroleum resins including those of the aliphatic, aromatic, alicyclic, copolymeric and hydrogenated types, terpene resins including polyterpenes, terpene-phenol resins and the like, xylene resins including modified xylene resins, phenolic resins including alkylphenol resins, modified phenol resins and the like, coumaroneindene resins, rosins, rosin-based resins including modified rosins and the like, shellacs, dammar resins, copal resins, polybutenes, polyisobutylenes, liquid polychloroprenes, liquid polybutadienes and the like. The amount of the component (D) is usually in the range from 10 to 50 parts by weight or, preferably, from 15 to 40 parts by weight per 100 parts by weight of the component (A). When the amount of the component (D) is too small, the water stop would have only poor adhesiveness and the resistance to joint gaps is decreased. When the amount is too large, on the other hand, the surface of the water stop is made hydrophobic to a greater or lesser extent so that the water stop is less water-swellable and does not fully exhibit the desired water leakage preventing power.

The component (E) compounded in the water-swellable composition for the inventive water stop is a plasticizer which is exemplified by plasticizers of phthalic acid-mineral oil of the paraffinic, naphthenic or aromatic type, phosphate ester-based plasticizers, adipate-based plasticizers, sebacate-based plasticizers, stearic acid, palmitic acid, caster oil, cottonseed oil, rapeseed oil, paraffins, chlorinated paraffins and the like. The amount of the plasticizer as the component (E) compounded in the water-swellable composition for the inventive water stop is usually in the range from 30 to 200 parts by weight or, preferably, from 50 to 150 parts by weight per 100 parts by weight of the component (A). When the amount is too small, the composition is imparted with increased hardness resulting in poor workability of the water stop prepared therefrom. When the amount is too large, on the other hand, the composition is imparted with decreased hardness so that a water stop prepared therefrom would be under a risk of eventual collapse by swelling with water after working.

The component (F) compounded in the water-swellable composition for the water stop of the invention is a vulcanizing agent which is exemplified by sulfur, modified phenolic resins such as methylolated alkylphenol resins, brominated alkylphenol resins and the like and thiuram compounds such as tetramethyl thiuram disulfide, tetramethyl thiuram monosulfide and the like. The amount of the component (F) is usually in the range from 0.1 to 5 parts by weight or, preferably, from 0.3 to 2.0 parts by weight per 100 parts by weight of the component (A). When the amount of the vulcanizing agent is too small, the crosslinking density in the water stop would be too low so that the water stop body has poor mechanical strength resulting in eventual collapsing of the water stop body after swelling with water. When the amount of the vulcanizing agent is too large, on the other hand, an undesirable phenomenon of blooming may be caused on the surface of the water stop.

It is usually desirable that the vulcanizing agent as the component (F) is used in combination with a vulcanization accelerator. Examples of the vulcanization accelerator include thiourea compounds such as mercaptoimidazoline and the like, thiazole compounds such as mercaptobenzothiazole, dibenzothiazyl disulfide and the like, carbamate compounds such as zinc dimethyl dithiocarbamate, copper dimethyldithiocarbamate and the like, and so on. Though largely dependent on the types of the vulcanizing agent, the amount of the vulcanization accelerator is usually in the range not exceeding 5 parts by weight or, preferably, from 0.5 to 3 parts by weight per 100 parts by weight of the component (A).

Further, the water-swellable composition for the inventive water stop is compounded optionally with a basic filler as the component (G), especially, when the inorganic water-absorbent as the component (C) has no basicity. The basic filler here implied includes various kinds of inorganic fillers of which a 10% by weight aqueous suspension has a pH of 8 or higher or, preferably, 9 or higher as exemplified by magnesium carbonate hydroxide, calcium carbonate hydroxide and the like. Compounding with component (G) has the effect of accelerating water absorption and swelling of the water stop when it is contacted with water so that the initial water-stopping effect can be rapidly brought about. The amount of the component (G) usually should not exceed 300 parts by weight or, preferably, should not exceed 200 parts by weight per 100 parts by weight of the component (A). When the amount is too large, the water leakage preventing power of the water stop may be somewhat decreased.

In addition to the above described components, it is optional that the water-swellable composition for the inventive water stop is admixed with various kinds of additives conventionally compounded in the prior art water stops, each in a limited amount. Some of such optional additives include ageing retarders, fillers, coloring agents, processing aids and the like. Examples of the ageing retarder include amine compounds, phenolic compounds and the like. Examples of the filler include calcium carbonate, zinc oxide, hard clay, carbon black and the like.

The water-swellable adhesive water stop of the invention can be prepared by uniformly compounding the above described components each in a specified amount by using a suitable blending machine such as a pressurizable kneader and the like to give a water-swellable composition and then shaping and vulcanizing the shaped composition to such an extent that the vulcanized composition may have a tensile strength Tb in the range from 1 to 30 kgf/cm², 100% elastic modulus in the range from 1 to 4 kgf/cm², ultimate elongation at break Eb of at least 300% and degree of swelling S₂₁ in the range from 150 to 500%. The definition of the degree of swelling S₂₁ has been given above. The water-swellable composition can be shaped by any known shaping method including extrusion molding, compression molding and the like.

The water-swellable adhesive water stop prepared in the above described manner exhibits excellent performance for water leakage prevention with various advantages including high adhesiveness to the substrate surface, relatively small compressive elastic resilience, good workability such as impregnability in working to any narrow gaps, follow-up behavior to the gap expansion after working by virtue of swelling with water and sufficiently high strength to withstand the collapsing force caused by excessive swelling.

Accordingly, the water-swellable adhesive water stop of the invention can be used in a wide field of applications, not only in civil engineering and architectural works of construction and maintenance for the prevention of water leakage through the joints in shield tunnel works and shield segments, joints of precast concrete bodies such as precast concrete pipes, precast culvert boxes and the like, construction joints in concrete structures, joints between steel bodies such as U-flumes, corrugated pipes and the like but also as various kinds of repair materials and a water-retaining material in agriculture and horticulture.

In the following description, examples are given to illustrate the present invention in more detail but not to limit the scope of the invention in any way. The term of "parts" appearing in the following always refers to "parts by weights". The materials used in the following examples for compounding are specified as follows.
(I) Butyl rubber A: Exxon Butyl 268, a product by Exxon Chemical Co.
(II) Butyl rubber B: Exxon Butyl 065, a product by Exxon Chemical Co.
(III) Butyl rubber C: Exxon Bromobutyl 2244, a product by Exxon Chemical Co.
(IV) Highly water-absorptive resin: KI Gel, a product by Kuraray Co.
(V) Inorganic water-absorbent A: Nipsil VN-3, a product by Nippon Silica Kogyo Co. (hydrated silicic acid, neutral)
(VI) Inorganic water-absorbent B: Nipsil NA, a product by Nippon Silica Kogyo Co. (hydrated silicic acid, basic)
(VII) Tackifier: petroleum resin Escorez 1102, a product by Tonex Co.
(VIII) Plasticizer: naphthenic process oil
(IX) Vulcanizing agent A: sulfur
(X) Vulcanizing agent B: tetramethyl thiuram disulfide
(IX) Vulcanization accelerator: mercaptobenzothiazole
(XII) Basic filler A: magnesium carbonate hydroxide
(XIII) Basic filler B: calcium carbonate hydroxide

### Example 1 .

A butyl rubber compound was prepared by thoroughly blending, in a pressurizable kneader for 30 minutes, 100 parts of butyl rubber A, 20 parts of the highly water-absorptive resin, 80 parts of the inorganic water-absorbent A, 20 parts of the tackifier, 80 parts of the plasticizer, 2 parts of the vulcanizing agent A, 1 part of the vulcanization accelerator 5 parts of zinc oxide, 75 parts of calcium carbonate and 20 parts of carbon black. The compound was extrusion-molded from a 60 mm-diameter extruder machine having a screw rotating at 40 rpm and a die kept at a temperature of 80 °C and the shaped compound was vulcanized by heating at 170 °C for 8 minutes.

The thus shaped and vulcanized test bodies had a tensile strength of 19.0 kgf/cm², 100% elastic modulus of 2.5 kgf/cm², ultimate elongation at break of 1200% and degree of swelling S₂₁ of 250%. The test bodies swollen with water maintained their shape before swelling without collapsing.

### Example 2.

A butyl rubber compound was prepared in the same manner as in Example 1 by thoroughly blending 50 parts of the butyl rubber B, 50 parts of the butyl rubber C, 40 parts of the highly water-absorptive resin, 30 parts of the inorganic water-adsorbent A, 25 parts of the tackifier, 75 parts of the plasticizer, 1.5 parts of the vulcanizing agent A, 0.8 part of the vulcanizing agent B, 4 parts of zinc oxide, 60 parts of calcium carbonate and 16 parts of carbon black. The compound was extrusion-molded in the same manner as in Example 1 and the shaped compound was vulcanized by heating at 170 °C for 10 minutes.

The thus shaped and vulcanized test bodies had a tensile strength of 18.0 kgf/cm², 100% elastic modulus of 2.0 kgf/cm², ultimate elongation at break of 1350% and degree of swelling S₂₁ of 420%. The test bodies swollen with water maintained their shape before swelling without collapsing.

### Example 3.

A rubber compound was prepared in the same manner as in Example 1 by thoroughly blending 100 parts of the butyl rubber C, 80 parts of an EPDM rubber, 40 parts of the highly water-absorptive resin, 60 parts of the inorganic water-absorbent A, 50 parts of the tackifier, 120 parts of the plasticizer, 2 parts of the vulcanizing agent A, 1 part of the vulcanizing agent B, 5 parts of zinc oxide, 75 parts of calcium carbonate and 20 parts of carbon black. The compound was extrusion-molded in the same manner as in Example 1 and the shaped compound was vulcanized by heating at 170 °C for 5 minutes.

The thus shaped and vulcanized test bodies had a tensile strength of 25.0 kgf/cm², 100% elastic modulus of 2.2 kgf/cm², ultimate elongation at break of 950% and degree of swelling S₂₁ of 170%. The test bodies swollen with water maintained their shape before swelling without collapsing.

### Example 4.

A butyl rubber compound was prepared in the same manner as in Example 1 by thoroughly blending 100 parts of the butyl rubber C, 10 parts of the highly water-adsorptive resin, 120 parts of the inorganic water-adsorbent A, 10 parts of a polybutene as a tackifier, 100 parts of the plasticizer, 1 part of the vulcanizing agent A, 1 part of the vulcanizing agent B, 3.5 parts of zinc oxide, 52.5 parts of calcium carbonate and 14 parts of carbon black. The compound was extrusion-molded in the same manner as in Example 1 and the shaped compound was vulcanized by heating at 170 °C for 10 minutes.

The thus shaped and vulcanized test bodies had a tensile strength of 15.0 kgf/cm², 100% elastic modulus of 1.3 kgf/cm², ultimate elongation at break of 1410% and degree of swelling S₂₁ of 220%. The test bodies swollen with water maintained their shape before swelling without collapsing.

### Example 5.

A butyl rubber compound was prepared in the same manner as in Example 1 by thoroughly blending 50 parts of the butyl rubber C, 50 parts of a reclaimed butyl rubber, 20 parts of the highly water-absorptive resin, 90 parts of the inorganic water-absorbent A, 20 parts of the tackifier, 80 parts of the plasticizer, 2 parts of the vulcanizing agent A, 1 part of the vulcanizing agent B, 4 parts of zinc oxide, 60 parts of calcium carbonate and 16 parts of carbon black. The compound was extrusion-molded in the same manner as in Example 1 and the shaped compound was vulcanized by heating at 170 °C for 10 minutes.

The thus shaped and vulcanized test bodies had a tensile strength of 16.0 kgf/cm², 100% elastic modulus of 1.8 kgf/cm², ultimate elongation at break of 1150% and degree of swelling S₂₁, of 280%. The test bodies swollen with water maintained their shape before swelling without collapsing.

### Comparative Example 1.

A full-vulcanization type SBR rubber compound was prepared in the same manner as in Example 1 by thoroughly blending 100 parts of an SBR, 7 parts of the plasticizer, 2 parts of the vulcanizing agent A, 3 parts of the vulcanization accelerator, 1 part of stearic acid, 3.5 parts of zinc oxide, 52.5 parts of calcium carbonate and 14 parts of carbon black. The compound was extrusion-molded in the same manner as in Example 1 and the shaped compound was vulcanized by heating at 170 °C for 10 minutes.

The thus shaped and vulcanized test bodies had a tensile strength of 185 kgf/cm², 100% elastic modulus of 15 kgf/cm², ultimate elongation at break of 650% and degree of swelling S₂₁ of 100% exhibiting low water-swellability and poor workability.

### Comparative Example 2.

A full-vulcanization type rubber compound was prepared in the same manner as in Example 1 by thoroughly blending 100 parts of a polychloroprene rubber, 60 parts of the highly water-absorptive resin, 4 parts of magnesium oxide, 5 parts of zinc oxide, 7 parts of the plasticizer, 1 part of the vulcanizing agent B, 1 part of stearic acid and 2 parts of an ageing retarder. The compound was extrusion-molded in the same manner as in Example 1 and the shaped compound was vulcanized by heating at 170 °C for 10 minutes.

The thus shaped and vulcanized test bodies had a tensile strength of 55 kgf/cm², 100% elastic modulus of 9 kgf/cm², ultimate elongation at break of 670% and degree of swelling S₂₁ of 610%. The water-swollen test bodies retained their shape before swelling without collapsing but the workability thereof as a water stop was poor due to high rigidity.

### Comparative Example 3.

An unvulcanizable adhesive butyl rubber compound was prepared in the same manner as in Example 1 by thoroughly blending 100 parts of the butyl rubber A, 10 parts of the tackifier, 100 parts of a polybutene as an additional tackifier, 150 parts of calcium carbonate and 30 parts of carbon black. The compound was extrusion-molded to give test samples.

The thus shaped test bodies had a tensile strength of 0.57 kgf/cm², 100% elastic modulus of 0.5 kgf/cm², ultimate elongation at break of 1600% and degree of swelling S₂₁ of 100% showing a very small swelling with water insufficient to meet the requirement for a water stop.

### Comparative Example 4.

An unvulcanizable water-swellable adhesive butyl rubber compound was prepared in the same manner as in Example 1 by thoroughly blending 100 parts of the butyl rubber A, 40 parts of the highly water-absorptive resin, 50 parts of the inorganic water-absorbent A, 10 parts of the tackifier, 100 parts of a polybutene as an additional tackifier, 100 parts of calcium carbonate and 20 parts of carbon black. The compound was extrusion-molded to give test samples.

The thus shaped test bodies had a tensile strength of 0.52 kgf/cm², 100% elastic modulus of 0.48 kgf/cm² and ultimate elongation at break of 1550%. The degree of swelling could not be determined because the test bodies became collapsed in the course of swelling in water.

### Comparative Example 5.

A partial-vulcanization type butyl rubber compound was prepared in the same manner as in Example 1 by thoroughly blending 100 parts of a partially vulcanized butyl rubber Escolant-10, 30 parts of the highly water-absorptive resin, 40 parts of the inorganic water-absorbent A, 10 parts of the tackifier, 50 parts of a polybutene as an additional tackifier, 120 parts of calcium carbonate and 30 parts of carbon black. The compound was extrusion-molded to give test samples.

The thus shaped test bodies had a tensile strength of 7.0 kgf/cm², 100% elastic modulus of 4.4 kgf/cm² and ultimate elongation at break of 790%. The degree of swelling could not be determined because the test bodies became collapsed in the course of swelling in water.

### Example 6.

A butyl rubber compound was prepared in the same manner as in Example 1 by thoroughly blending 100 parts of the butyl rubber A, 10 parts of the highly water-absorptive resin, 60 parts of the inorganic water-absorbent B, 20 parts of the tackifier, 60 parts of the plasticizer, 2 parts of the vulcanizing agent A, 1 part of the vulcanization accelerator, 5 parts of zinc oxide, 50 parts of calcium carbonate and 15 parts of carbon black. The compound was extrusion-molded in the same manner as in Example 1 and the shaped compound was vulcanized by heating at 170 °C for 5 minutes.

The thus shaped and vulcanized test bodies had a tensile strength of 2.53 kgf/cm², 100% elastic modulus of 1.3 kgf/cm², ultimate elongation at break of at least 2000% and degrees of swelling S₇, S₁₄ and S₂₁ of 180%, 275% and 304%, respectively. The test bodies swollen with water maintained their shape before swelling without collapsing.

### Example 7.

A butyl rubber compound was prepared in the same manner as in Example 1 by thoroughly blending 50 parts of the butyl rubber B, 50 parts of the butyl rubber C, 30 parts of the highly water-absorptive resin, 30 parts of the inorganic water-absorbent A, 30 parts of the inorganic water-absorbent B, 30 parts of the tackifier, 80 parts of the plasticizer, 2 parts of the vulcanizing agent A, 1 part of the vulcanizing agent B, 5 parts of zinc oxide, 50 parts of calcium carbonate and 15 parts of carbon black. The compound was extrusion-molded in the same manner as in Example 1 and the shaped compound was vulcanized by heating at 170 °C for 10 minutes.

The thus shaped and vulcanized test bodies had a tensile strength of 15.8 kgf/cm², 100% elastic modulus of 2.8 kgf/cm², ultimate elongation at break of 1200% and degrees of swelling S₇, S₁₄ and S₂₁ of 220%, 350% and 381%, respectively. The test bodies swollen with water maintained their shape before swelling without collapsing.

### Example 8.

A butyl rubber compound was prepared in the same manner as in Example 1 by thoroughly blending 100 parts of the butyl rubber C, 25 parts of the highly water-absorptive resin, 80 parts of the inorganic water-absorbent A, 10 parts of a polybutene as a tackifier, 100 parts of the plasticizer, 1 part of the vulcanizing agent A, 0.8 parts of the vulcanizing agent B, 50 parts of the basic filler A, 5 parts of zinc oxide, 15 parts of carbon black and 40 parts of calcium carbonate. The compound was extrusion-molded in the same manner as in Example 1 and the shaped compound was vulcanized by heating at 170 °C for 4 minutes.

The thus shaped and vulcanized test bodies had a tensile strength of 1.10 kgf/cm², 100% elastic modulus of 1.1 kgf/cm², ultimate elongation at break of at least 2000% and degrees of swelling S₇, S₁₄ and S₂₁ of 250%, 390% and 416%, respectively. The test bodies swollen with water maintained their shape before swelling without collapsing.

### Example 9.

A butyl rubber compound was prepared in the same manner as in Example 1 by thoroughly blending 30 parts of the butyl rubber B, 70 parts of the butyl rubber C, 10 parts of the highly water-absorptive resin, 60 parts of the inorganic water-absorbent A, 10 parts of a polybutene as a tackifier, 70 parts of the plasticizer, 2 parts of the vulcanizing agent A, 1 part of the vulcanizing agent B, 0.8 part of the vulcanization accelerator, 50 parts of the basic filler B, 5 parts of zinc oxide, 15 parts of carbon black and 40 parts of calcium carbonate. The compound was extrusion-molded in the same manner as in Example 1 and the shaped compound was vulcanized by heating at 170 °C for 7 minutes.

The thus shaped and vulcanized test bodies had a tensile strength of 1.80 kgf/cm², 100% elastic modulus of 1.5 kgf/cm², ultimate elongation at break of at least 2000% and degrees of swelling S₇, S₁₄ and S₂₁ of 150%, 230% and 260%, respectively. The test bodies swollen with water maintained their shape before swelling without collapsing.

### Example 10.

A butyl rubber compound was prepared in the same manner as in Example 1 by thoroughly blending 100 parts of the butyl rubber A, 60 parts of the inorganic water-absorbent B, 20 parts of the highly water-absorptive resin, 20 parts of the tackifier, 60 parts of the plasticizer, 2 parts of the vulcanizing agent A, 1 part of the vulcanization accelerator, 60 parts of the basic filler A, 5 parts of zinc oxide and 15 parts of carbon black. The compound was extrusion-molded in the same manner as in Example 1 and the shaped compound was vulcanized by heating at 170 °C for 5 minutes.

The thus shaped and vulcanized test bodies had a tensile strength of 1.80 kgf/cm², ultimate elongation at break of at least 2000% and degrees of swelling S₇, S₁₄ and S₂₁ of 210%, 330% and 368%, respectively. The test bodies swollen with water maintained their shape before swelling without collapsing.

### Comparative Example 6.

A butyl rubber compound was prepared in the same manner as in Example 1 by thoroughly blending 50 parts of the butyl rubber A, 50 parts of the butyl rubber C, 80 parts of the highly water-absorptive resin, 10 parts of the tackifier, 80 parts of the plasticizer, 2 parts of the vulcanizing agent A, 1 part of the vulcanization accelerator, 10 parts of zinc oxide, 100 parts of calcium carbonate and 30 parts of carbon black. The compound was extrusion-molded in the same manner as in Example 1 and the shaped compound was vulcanized by heating at 170 °C for 5 minutes.

The thus shaped and vulcanized test bodies had a tensile strength of 3.50 kgf/cm², 100% elastic modulus of 2.6 kgf/cm², ultimate elongation at break of at least 1800% and degree of swelling S₇ of 320%. The thus prepared water stop had poor mechanical strength and collapsed during further continued immersion in water.

## Claims

1. A water-swellable adhesive water stop which is a shaped and vulcanized body of a vulcanizable rubber composition comprising:
(A) 100 parts by weight of a butyl rubber;
(B) from 1 to 50 parts by weight of a highly water-absorptive resin;
(C) from 30 to 200 parts by weight of an inorganic water-absorbent;
(D) from 10 to 50 parts by weight of a tackifier;
(E) from 30 to 200 parts by weight of a plasticizer; and
(F) from 0.1 to 5 parts by weight of a vulcanizing agent, and has a tensile strength in the range of 1 to 30 kgf/cm², 100% elastic modulus in the range from 1 to 4 kgf/cm², ultimate elongation at break of at least 300% and degree of swelling in water in the range of from 150 to 500% after immersion in water for 21 days at 23°C.

2. A water-swellable adhesive water stop as claimed in claim 1 wherein the inorganic water-absorbent has basicity.

3. A water-swellable adhesive water stop as claimed in claim 1 or claim 2 wherein the inorganic water-absorbent is selected from hydrated silicic acid, hydrated silicates and bentonite.

4. A water-swellable adhesive water stop as claimed in any one of the preceding claims wherein the vulcanizable rubber composition further comprises:
(G) from 5 to 300 parts by weight of a basic filler.

5. A water-swellable adhesive water stop as claimed in claim 4 wherein the basic filler is magnesium carbonate hydroxide or calcium carbonate hydroxide.

## Patentansprüche

1. In Wasser quellbarer klebender Wasserstop in Form eines geformten und vulkanisierten Körpers aus einer vulkanisierbaren Gummimasse mit
(A) 100 Gewichtsteilen eines Butylgummis,
(B) 1 bis 50 Gewichtsteilen eines hochgradig Wasser absorbierenden Harzes,
(C) 30 bis 200 Gewichtsteilen eines anorganischen, Wasser absorbierenden Materials,
(D) 10 bis 50 Gewichtsteilen eines Klebrigmachers,
(E) 30 bis 200 Gewichtsteilen eines Weichmachers und
(F) 0.1 bis 5 Gewichtsteilen eines Vulkanisiermittels und mit einer Zugfestigkeit im Bereich von 1 bis 30 kg/cm², 100% Elastizitätsmodul im Bereich von 1 bis 4 kg/cm², einer Bruchdehnung von wenigstens 300% und einem Grad für das Quellen in Wasser im Bereich von 150 bis 500% nach dem Eintaucher in Wasser während einer Zeit von 21 Tagen bei 23°C.

2. In Wasser quellbarer klebender Wasserstop nach Anspruch 1, wobei das Wasser absorbierende Material basisch ist.

3. In Wasser quellbarer Wasserstop nach Anspruch 1 oder 2, wobei das anorganische,Wasser absorbierende Material ausgewählt ist aus hydrierter Kieselsäure, hydrierten Silikaten und Bentonit.

4. In Wasser quellbarer Wasserstop nach einem der vorhergehenden Ansprüche, wobei die vulkanisierbare Gummimasse zusätzlich enthält:
(G) 5 bis 300 Gewichtsteile eines basischen Füllmittels.

5. In Wasser quellbarer Wasserstop nach Anspruch 4, wobei das basische Füllmittel Magnesiumkarbonathydroxid oder Kalziumkarbonathydroxid ist.

## Revendications

1. Garniture d'étanchéité gonflable à l'eau qui est un corps configuré et vulcanisé d'une composition de caoutchouc vulcanisable comprenant:
(A) 100 parties en poids d'un caoutchouc butyle ;
(B) 1 à 50 parties en poids d'une résine absorbant fortement l'eau ;
(C) 30 à 200 parties en poids d'un absorbant inorganique de l'eau;
(D) 10 à 50 parties en poids d'un agent d'adhésivité;
(E) 30 à 200 parties en poids d'un agent plastifiant; et
(F) 0,1 à 5 parties en poids d'un agent vulcanisant, et elle a une résistance à la traction comprise entre 1 et 30 kg/cm2, un module d'élasticité à 100 % compris entre 1 et 4 kg/cm2, un allongement ultime à la rupture d'au moins 300 % et un degré de gonflement dans l'eau compris entre 150 et 500 % après immersion dans l'eau pendant 21 jours à 23 °C.

2. Garniture d'étanchéité gonflable à l'eau selon la revendication 1, où l'absorbant inorganique de l'eau a une certaine basicité.

3. Garniture d'étanchéité gonflable à l'eau selon la revendication 1 ou la revendication 2, où l'absorbant inorganique de l'eau est choisi parmi l'acide silicique hydraté, les silicates hydratés et la bentonite.

4. Garniture d'étanchéité gonflable à l'eau selon l'une quelconque des revendications précédentes où la composition de catouchouc vulcanisable contient de plus :
(G) 5 à 300 parties en poids d'une charge basique.

5. Garniture d'étanchéité gonflable à l'eau selon la revendication 4, où la charge basique est de l'hydroxyde de carbonate de magnésium ou de l'hydroxyde de carbonate de calcium.
